Europäisches Patentamt

European Patent Office

Office européen des brevets

(11) Veröffentlichungsnummer: **0 397 819 B1**

(12) **EUROPÄISCHE PATENTSCHRIFT**

(45) Veröffentlichungstag der Patentschrift: **19.04.95**

(51) Int. Cl.⁶: **C08J 5/00**, C08L 3/00

(21) Anmeldenummer: **89911760.0**

(22) Anmeldetag: **27.10.89**

(86) Internationale Anmeldenummer:
**PCT/CH89/00185**

(87) Internationale Veröffentlichungsnummer:
**WO 90/05161 (17.05.90 90/11)**

Die Akte enthält technische Angaben, die nach
dem Eingang der Anmeldung eingereicht wurden
und die nicht in dieser Patentschrift enthalten sind.

(54) **THERMOPLASTISCH VERARBEITBARE STÄRKE SOWIE VERFAHREN ZU DEREN HERSTELLUNG.**

(30) Priorität: **03.11.88 CH 4083/88**

(43) Veröffentlichungstag der Anmeldung:
**22.11.90 Patentblatt 90/47**

(45) Bekanntmachung des Hinweises auf die
Patenterteilung:
**19.04.95 Patentblatt 95/16**

(84) Benannte Vertragsstaaten:
**AT BE CH DE FR GB IT LI LU NL SE**

(56) Entgegenhaltungen:
EP-A- 118 240      BE-A- 0 654 605
FR-A- 1 293 184      GB-A- 1 014 801
US-A- 2 788 546      US-A- 4 076 846

J. Brandrup, E.H. Immergut, Polymer Handbook, 2nd Ed., John Wiley and Sons, New
York 1975, Seiten IV-337 bis IV-359.

CA:(97)70710

(73) Patentinhaber: **Bio-tec Biologische Naturverpackungen GmbH
Blinder Weg 4
D-46446 Emmerich (DE)**

(72) Erfinder: **Tomka, Ivan, Dr.
Chalet Breitfeld
CH-1722 Bourguillon (CH)**

(74) Vertreter: **Troesch Scheidegger Werner AG
Patentanwälte,
Siewerdtstrasse 95,
Postfach
CH-8050 Zürich (CH)**

**Beschreibung**

Die vorliegende Erfindung bezieht sich auf thermoplastisch verarbeitbare Stärke, auf ein Verfahren zur Herstellung von thermoplastisch verarbeitbarer Stärke, auf ein Verfahren zur Herstellung von Granulaten, Schuppen etc. und von Formkörpern, Extrudaten, Folien usw. aus Stärke sowie auf Formkörper, Füllstoffe und Trägermaterialien, bestehend im wesentlichen aus Stärke.

Natürliche oder sog. native Stärke, wie sie durch Waschen und Trocknen aus der Rohstärke, beispielsweise von Kartoffeln, Getreide, Mais usw. gewonnen wird, besitzt eine ausgeprägte makromolekulare Struktur, wobei die Makromoleküle sich gar nicht oder nur teilweise durchdringen. Diese Struktur führt dazu, dass die native Stärke sehr inhomogen ist, wobei diese Inhomogenität, normalerweise mindestens teilweise auch beim Aufschmelzen der Stärke beibehalten wird.

Im Zuge des vermehrten Einsatzes von sog. hydrophilen Polymeren, worunter auch die Stärke fällt, als sog. natürliche Kunststoffe für die vielfältigsten Anwendungsbereiche, wird auch versucht, Stärke mittels der bekannten Kunststoffverarbeitungstechniken zu verarbeiten, d.h. beispielsweise mittels Spritzguss und Extrusion.

Aufgrund der oben geschilderten Eigenschaften der nativen Stärke konnten aber keine Formkörper aus Stärke hergestellt werden, die ausreichende mechanische Eigenschaften, wie beispielsweise Festigkeit aufweisen. Gemäss den heute bekannten Verarbeitungstechniken zum Verarbeiten von sog. hydrophilen Polymeren, wie beispielsweise Gelatine oder Cellulose, wurde versucht, Stärke mit einem gewissen Wassergehalt, in der Grössenordnung von 10% bis 20%, bezogen auf das Gesamtgewicht, beispielsweise in einem Schneckenextruder von einer Spritzgussmaschine zu homogenisieren und anschliessend zu verarbeiten.

Die GB-PS-1 014 801 beschreibt ein Verfahren, gemäss welchem eine gekühlte Mischung aus nativer Stärke mit 12% bis 15% Wasser, oder einem nicht wesentlich kleineren Wassergehalt, und einem Gelatinisierungspromotor zu einem kunststoffähnlichen Produkt verarbeitet wird. Gemäss dem beschriebenen Verfahren ist es wesentlich, dass die Stärke einen ausreichenden Wassergehalt aufweist von mindestens 12%.

In der EP-A-0 118 240 wird ein Stärkematerial und ein Verfahren zu dessen Herstellung beschrieben, das geeignet ist für die Herstellung von Formkörpern, wie insbesondere von Kapseln für das Einschliessen von pharmazeutischen Produkten. Dabei wird Stärke bei erhöhter Temperatur und unter Druck und einem Wassergehalt von 5 bis 30Gew% plastifiziert, um sie so in die erfindungsgemäss geforderte verarbeitbare Form zu bringen.

Die FR-1 293 184 beschreibt die Verarbeitung bzw. Plastifizierung von Stärkederivaten, wobei u.a. vorgeschlagen wird, "Stärkehydroxypropylic" mit 10% Glycerin bei 100°C und einem Wasseranteil zwischen 1-20% zu extrudieren, worauf die plastifizierte Masse während 24 Stunden bei 25°C und 20% relativer Luftfeuchtigkeit konditioniert wird. Wesentlich ist, dass die so hergestellte plastifizierte Masse wasserlöslich ist.

In der DE-OS-37 12 029 wird ein Verfahren für das Druckformen von Formkörpern aus Stärke beschrieben, in dem eine Mischung aus nativer Stärke mit u.a. 0,5% eines Gleitmittels und 10% bis 22% Wasser in einer Spritzgussmaschine in einem Temperaturbereich von 90°C bis 240°C aufgeschmolzen wird und anschliessend verarbeitet wird. Wesentlich dabei ist, dass der Wassergehalt im ganzen Prozess beibehalten wird.

Es hat sich gezeigt, dass diese Verarbeitungstechnik nur dann eine Verbesserung der mechanischen Eigenschaften der Stärkeformkörper und damit des Homogenisierungseffektes in der Stärkschmelze mit sich bringt, wenn das Wasser in der Einzugszone des Schneckenkolbens nicht durch Wärme als Wasserdampf aus der Stärke ausgetrieben wird, sondern entlang der ganzen Kolbenlänge in der Stärke verbleibt. Voraussetzung dabei ist auch, dass eine ausgezeichnete Durchmischung stattfindet, wie dies beispielsweise in einem Kneter oder einem Zweiwellenextruder mit entsprechend langer Kolbenlänge der Fall ist. Der Wellenkolben resp. Kneterkolben bildet in diesem Fall einen quasi geschlossenen Raum, wobei die Kolbenlänge und die Temperaturführung entlang des Kolbens kritisch sind, damit der Homogenisierungseffekt ausreichend erzeugt werden kann.

Diese Prozessführung zur Herstellung von homogener Stärke oder besser thermoplastisch verarbeitbarer Stärke ist offensichtlich kompliziert und kritisch, sind doch verschiedene Verarbeitungsparameter, wie Einhalten eines ausreichenden Wassergehaltes, Temperatur, Prozessführung, Maschinentyp, Schneckenlänge usw. genau einzuhalten. Es ist daher auch nicht erstaunlich, dass im bekannten Verfahren gemäss der EP-A-0 304 401 empfohlen wird, den sog. Homogenisierungsschritt oder auch Destrukturierungsschritt genannt und die nachfolgende Verarbeitung der Stärkschmelze voneinander zu trennen, um ausreichende Eigenschaften in Stärkeformkörpern zu erhalten. Wesentlich gemäss dem erwähnten Prozess ist, dass der erste Verfahrensschritt in einem sog. geschlossenen System durchgeführt wird, so dass das Wasser nicht beispielsweise in Form von Dampf entweichen kann.

Der im erwähnten Verfahren notwendige hohe Wassergehalt von 10% bis 20% ist, wie allgemein in der Kunststoffverarbeitungstechnik bekannt, nicht unbedingt vorteilhaft für die Verarbeitung und auch nicht für die Eigenschaft der herzustellenden Formkörper. Insbesondere verhindert beispielsweise ein Wassergehalt in der Grössenordnung von 17% oder mehr ein vernünftiges Extrudieren der Stärke, beispielsweise für die Herstellung von Folien, Profilen oder von Schläuchen. Generell kann gesagt werden, dass eine offene Verarbeitungsweise, wie dies beispielsweise bei der Extrusion der Fall ist, infolge des hohen Dampfdruckes von Wasser, der deutlich über 1 bar liegt, verunmöglicht wird. Liegt jedoch der Wassergehalt mindestens bei 25 Gew%, kann die Mischung bei 108°C im "offenen" System verarbeitet werden. Das Extrudat jedoch ist bei 20°C klebrig und nicht formstabil.

Es ist daher eine Aufgabe der vorliegenden Erfindung, thermoplastisch verarbeitbare Stärke und ein Verfahren zu deren Herstellung zu schaffen, ohne die oben erwähnten Nachteile und um eine einfachere Prozessführung zu erlauben und um ein problemloses thermoplastisches Verarbeiten der Stärke gemäss den bekannten Polymerverarbeitungstechniken zu ermöglichen.

Erfindungsgemäss wird diese Aufgabe mittels eines Verfahrens gemäss dem Wortlaut nach Anspruch 1 gelöst sowie durch thermoplastisch verarbeitbare Stärke gemäss dem Wortlaut nach Anspruch 22.

Vorgeschlagen wird ein Verfahren zur Herstellung von thermoplastisch verarbeitbarer homogener Stärke, welche einen kristallinen Anteil in der Stärke von weniger als 5% aufweist. Mittels der Kristallinität der Stärke kann festgestellt worden, ob eine ausreichende Homogenisierung in der Stärke vorliegt und damit die Stärke thermoplastisch verarbeitbar ist. Währenddem native Stärke hochkristallin ist, umfasst thermoplastisch verarbeitbare Stärke praktisch keine kristallinen Anteile mehr. Gemäss dem Verfahren wird native oder natürliche Stärke zusammen mit mindestens 10Gew%, bezogen auf das Gesamtgewicht der Mischung von Stärke und Zuschlagstoff, von mindestens einem Zuschlagstoff gemischt und durch Zuführung von Wärme in Schmelze gebracht, wobei der oder die Zuschlagstoff(e) einen Löslichkeitsparameter von grösser als 30,7 $(MPa)^{1/2}$ ($= 15$ $(cal^{1/2}cm^{-3/2})$) aufweist (aufweisen) und beim Mischen mit der Stärke deren Schmelzpunkt derart erniedrigt (erniedrigen), dass die Schmelztemperatur der Stärke/Zuschlagstoffmischung unterhalb der Zersetzungstemperatur der Stärke liegt. Der Dampfdruck des oder der Zuschlagstoffe(s) in der Mischung zusammen mit der Stärke ist im Schmelztemperaturbereich der homogenen Mischung kleiner als 1bar. Schliesslich muss der Wassergehalt der Stärke beim Mischen in der Schmelze auf weniger als 5% reduziert werden.

Aus diesem Grund soll in der Schmelze genügend Zuschlagstoff vorliegen, welcher das Wasser verdrängt respektive dieses ersetzt, um den Wassergehalt in der Schmelze auf kleiner als 5%, bezogen auf die Stärke, zu reduzieren. Durch Zusetzen von Zuschlagstoff bzw. Zuschlagstoffen, insbesondere beim Aufschmelzen und beim Mischen, wird der an sich in der Stärke naturgemäss vorhandene Gehalt an Wasser von ca. 17% entfernt.

Vorzugsweise ist der Löslichkeitsparameter des Zuschlagstoffes in einem Temperaturbereich von 100°C bis 300°C in der Grössenordnung von 30,7 bis 51,0 $(MPa)^{1/2}$ ($= 15$ bis $25$ $cal^{1/2}cm^{-3/2}$).

Insbesondere falls das Aufschmelzen und Durchmischen der Stärke mit dem mindestens einen Zuschlagstoff in einer offenen Umgebung, d.h. nicht unter Druck erfolgt, muss der Dampfdruck des Zuschlagstoffes im Schmelzbereich von Zuschlagstoff und Stärke, in welchem die Durchmischung resp. die Verarbeitung der thermoplastisch verarbeitbaren Stärke erfolgt, kleiner einer Atmosphäre sein, damit der Zuschlagstoff nicht oder kontrollierbar aus dem Gemisch mit der Stärke entweicht.

Weiter wird vorgeschlagen, dass der mindestens eine Zuschlagstoff derart gewählt wird, dass die Grenzflächenenergie zwischen Zuschlagstoff und Stärke nicht grösser ist als 20% der einzelnen Grenzflächenenergien gegenüber Luft. Falls der Zuschlagstoff diese Forderung erfüllt, ist sichergestellt, dass die Wechselwirkung zwischen Zuschlagstoff und der Stärke ausreichend ist.

Die Durchmischung der natürlichen oder nativen Stärke zusammen mit dem Zuschlagstoff kann dadurch erfolgen, dass man das Gemisch einer Kunststoffverarbeitungsmaschine, wie beispielsweise einem Ein- oder Zweiwellenextruder, oder einem Kneter zuführt und in diesem, wie beispielsweise im Wellenkolben oder dem Kneterkolben, das Gemisch zu einer wenigstens nahezu homogenen thermoplastischen Masse mischt. Insbesondere dann, wenn der Dampfdruck des Zuschlagstoffes im Temperaturbereich, in welchem die Mischung durchgeführt wird, kleiner einer Atmosphäre ist, kann die Durchmischung in irgendeinem offenen oder geschlossenen Gefäss durchgeführt werden. Nur dann, wenn der Dampfdruck des Zuschlagstoffes im Temperaturbereich des Durchmischens grösser einer Atmosphäre ist, muss das Gefäss geschlossen sein, damit der Zuschlagstoff nicht aus dem Gemisch entweicht.

Weiter wird vorgeschlagen, als Zuschlagstoff mindestens eine der nachfolgenden Substanzen zu verwenden:

Glycerin, Formamid oder N-Methylformamid.

Vorzugsweise werden der Stärke 10 bis 35Gew% an Zuschlagstoff(en), bezogen auf das Gesamtgewicht, der Mischung beigegeben.

Weiter wird vorgeschlagen, dem Gemisch aus Stärke und Zuschlagstoff ein Plastifiziermittel beizufügen, wobei insbesondere vorgeschlagen wird, 0,5 bis 15Gew%, bezogen auf das Gesamtgewicht der Mischung aus Stärke und Zuschlagstoff, beispielsweise eine der nachfolgenden Substanzen beizufügen:
Sorbitol, Glycerin, Glycerinmono- oder -diacetat, ein Polyalkylenoxid oder ein Citrat.

Vorzugsweise erfolgt die Durchmischung und Homogenisierung der Stärke mit dem Zuschlagstoff in einem Temperaturbereich von 120 bis 220°C.

Gemäss einer bevorzugten Ausführungsvariante wird die Stärke mit 10 bis 35Gew%, bezogen auf das Gesamtgewicht der Mischung, mit Glycerin gemischt und aufgeschmolzen und anschliessend in der Schmelze so lange gemischt, bis eine wenigstens nahezu homogene Mischung entsteht, in welcher nach Erkalten die kristallinen Anteile in der Stärke weniger als 5% betragen.

Weitere bevorzugte Ausführungsvarianten des erfindungsgemässen Verfahrens sind in den abhängigen Ansprüchen 2 bis 21 charakterisiert.

Vorzugsweise wird die natürliche oder native Stärke zusammen mit dem mindestens einen Zuschlagstoff und gegebenenfalls weiteren Additiven einer Kunststoff-Verarbeitungsmaschine, wie einem Ein- oder Zweiwellenextruder, oder einem Kneter zugeführt, aufgeschmolzen und zu einer homogenen thermoplastischen Masse gemischt.

Es wird weiter vorgeschlagen, dem Gemisch aus Stärke und Zuschlagstoff mindestens ein weiteres Additiv beizufügen, wie beispielsweise einen Füllstoff, ein Gleitmittel, ein Plastifiziermittel, ein Flexibilisierungsmittel, ein Pigmentierungsmittel oder einen sonstigen Farbstoff und/oder ein Entformungsmittel.

Als Füllstoffe eignen sich insbesondere die nachfolgenden Materialien:
Polysaccharid, ein Derivat der Cellulose, ein synthetisches Polymer, das wenigstens nahezu in einem Zuschlagstoff für die Stärke löslich ist, und/oder ein Gelatinephthalat.

Es wird vorgeschlagen, 0 bis 50Gew% Füllstoff, vorzugsweise 3 bis 10Gew%, bezogen auf das Gesamtgewicht der Mischung aus Stärke und Zuschlagstoff, beizugeben.

Weiter wird vorgeschlagen, mindestens einen inorganischen Füllstoff, wie beispielsweise Magnesiumoxid, in einer Konzentration von 0,02 bis 3Gew%, vorzugsweise 0,02 bis 1Gew%, bezogen auf das Gesamtgewicht, beizufügen.

Als Plastifizierungsmittel eignen sich insbesondere Polyalkylenoxid, Glycerin, Glycerinmono- oder diacetat, Sorbitol sowie Citrat, die in einer Konzentration im Bereich von 0,5 bis 15Gew%, vorzugsweise von 0,5 bis 5Gew%, bezogen auf das Gesamtgewicht, dem Gemisch aus Stärke und Zuschlagstoff beizufügen sind.

Zum Einfärben des Gemisches aus Stärke und Zuschlagstoff eignen sich insbesondere organische oder anorganische Pigmente mit einer Konzentration in der Grössenordnung von 0,001 bis 10Gew%, vorzugsweise 0,5 bis 3Gew%.

Zur Verbesserung der Fliesseigenschaften eignen sich insbesondere tierische oder pflanzliche Fette und/oder Lecithine, die vorzugsweise in hydrogenierter Form verwendet werden, wobei diese Fette und sonstigen Fettsäurederivate vorzugsweise einen Schmelzpunkt grösser als 50°C haben.

Um die Hydrophilie und damit die Wasserunbeständigkeit der thermoplastisch verarbeitbaren Stärke während und nach deren Verarbeitung zu reduzieren, wird weiter vorgeschlagen, dem Gemisch aus Stärke und Zuschlagstoff ein Vernetzungsmittel beizufügen oder ein Mittel, um die Stärke chemisch zu modifizieren, wie beispielsweise Alkylsiloxane.

Als Vernetzungsmittel eignen sich insbesondere die nachfolgend, angeführten Substanzen:
Zwei- und mehrwertige Karbonsäuren sowie deren Anhydride, Säurehalogenide und/oder Säureamide von zwei- und mehrwertigen Karbonsäuren, Derivate von zwei- oder mehrwertigen anorganischen Säuren, Epoxide, Formaldehyd und/oder Harnstoffderivate, Divinylsulfone, Isocyanate, Oxoverbindungen, wie Acetonformaldehyd oder mehrwertige Oxoverbindungen und/oder Cyanamid. Bei Verwendung von Säureamiden von Karbonsäuren sollte eine Säuregruppe als freie Karboxylgruppe vorliegen.

Die vorab vorgeschlagenen Verfahren zur Herstellung von thermoplastisch verarbeitbarer Stärke eignen sich insbesondere zur Herstellung von Granulaten, Schuppen, Pillen, Pulver, Tabletten, Fasern etc. aus thermoplastisch verarbeitbarer Stärke.

Die gemäss den vorab beschriebenen Verfahren hergestellte thermoplastisch verarbeitbare Stärke lässt sich direkt gemäss den üblich bekannten Kunststoffverarbeitungsmethoden weiter verarbeiten. Allerdings ist insbesondere bei Extrusion von Schläuchen, Folien und dergleichen zu beachten, dass der Zuschlagstoff bei der Verarbeitungstemperatur einen Dampfdruck kleiner einer Atmosphäre aufweist, um ein Schäumen der Stärke zu verhindern. Bei zu hohem Wassergehalt ist beispielsweise das Herstellen von Blasfolien,

4

EP 0 397 819 B1

Schläuchen usw. nicht möglich. Durch das Zusetzen einer ausreichenden Menge von Zuschlagstoff wird die an sich natürliche Aufnahme von Wasser in der Stärke wenigstens teilweise verhindert.

Im weiteren wird thermoplastisch verarbeitbare homogene Stärke mit einem kristallinen Anteil in der Stärke von weniger als 5% vorgeschlagen, welche erhältlich ist durch homogenes Mischen von Stärke und/oder einem Stärkederivat mit mindestens 10Gew%, bezogen auf das Gesamtgewicht von mindestens einem Zuschlagstoff, wobei der oder die Zuschlagstoff(e) beim Mischen mit der Stärke deren Schmelzpunkt derart erniedrigt bzw. erniedrigen, dass die Schmelztemperatur der Stärke/Zuschlagstoffmischung unterhalb der Zersetzungstemperatur der Stärke liegt, sowie einen Dampfdruck in der Mischung zusammen mit der Stärke im Schmelztemperaturbereich der Mischung aufweist (aufweisen), der kleiner ist als 1bar. Beim Mischen in der Schmelze muss der Wassergehalt der Stärke auf kleiner als 5% reduziert werden.

Vorgeschlagen wird, dass die Molmasse der verwendeten Stärke in einem Bereich grösser 1 Mio. liegt, vorzugsweise in einem Bereich von 3 Mio. bis 10 Mio.

Der Löslichkeitsparameter $\delta$ setzt sich bekanntlich im wesentlichen aus den drei Anteilen, nämlich einem polaren Anteil $\delta_p$, einem den Wasserstoffbrückenbindungen entsprechenden Anteil $\delta_H$ und einem Dispersionsanteil $\delta_d$ zusammen, resp. er ist eine Funktion dieser drei Grössen. Erfindungsgemäss wird vorgeschlagen, dass der den polaren Wechselwirkungen entsprechende Anteil $\delta_p$ und der den Wasserstoffbrückenbindungen entsprechende Anteil $\delta_H$ des Löslichkeitsparameters $\delta$ grösser sind als der den Dispersionskräften entsprechende Anteil $\delta_d$ des Löslichkeitsparameters $\delta$ des mindestens einen Zuschlagstoffes. Vorzugsweise sind $\delta_p$ und $\delta_H$ doppelt so gross wie der Dispersionsanteil $\delta_d$.

Weitere erfindungsgemäss ausgestaltete Varianten von thermoplastisch verarbeitbarer homogener Stärke sind in den abhängigen Ansprüchen 23 bis 25 charakterisiert.

Die thermoplastisch verarbeitbare Stärke kann in Form von Granulaten, von Schuppen, von Pillen, von Tabletten oder als Pulver oder in Form von Fasern vorliegen.

Die gemäss den vorab beschriebenen Verfahren hergestellte thermoplastisch verarbeitbare Stärke eignet sich insbesondere als Füllstoff resp. als Formulierungshilfsstoff für das Zusetzen zu thermoplastischen oder duroplastischen Polymeren. Die Eignung als Füllstoff resp. Formulierungshilfsstoff ergibt sich insbesondere aus der Tatsache, dass die Eigenschaften der thermoplastisch verarbeitbaren Stärke über die Molmasse resp. die Molmassenverteilung der Stärke, die relativ eng ist, steuerbar sind.

Im weiteren eignet sich die thermoplastisch verarbeitbare Stärke z.B. als Trägermaterial für Wirkstoffe, wie beispielsweise Pharmawirkstoffe, und Reagenzien, wie beispielsweise Flockierungsmittel für Abwasser.

Ebenso eignet sich thermoplastisch verarbeitbare Stärke zum Binden von Wasser in wasserarmer Umgebung und/oder auf einer wasserdurchlässigen Unterlage. Die Stärke wird beispielsweise zu grossflächigen Folien oder Netzwerken extrudiert und auf die Unterlage, bestehend beispielsweise aus Sand oder Kies, ausgelegt. Aufgrund der Hydrophilie bindet die Stärke Wasser, womit beispielsweise in wüstenähnlichen Gegenden die Bewässerung des Bodens effizienter erfolgen kann.

Das erfindungsgemässe Verfahren wird nun anhand von einigen prinzipiellen Versuchsergebnissen unter Bezug auf Tabellen weiter erläutert.

Dabei zeigen

Tabelle I die Auswirkung von Zuschlagstoffen auf die Schmelztemperatur von nativer Stärke,

Tabelle II den Homogenisierungsvorgang bei verschiedener Zuschlagsmenge und verschiedenen Homogenisierungsbedingungen sowie deren Auswirkungen auf die Molmasse und Kristallinität der Stärke,

Tabelle III ausgewählte mechanische Werte von homogenisierter und ungenügend homogenisierter Stärke und

Tabelle IV die Abhängigkeit der Scherviskosität von der Homogenisierungstemperatur und der Zusammensetzung der Stärke.

Um den Einfluss von Zuschlagstoffen auf die native Stärke zu untersuchen, ist es notwendig, den an sich in der Stärke naturgemäss vorhandenen Gehalt an Wasser von ca. 17% zu entfernen. Dies geschieht einerseits durch Zusetzen von Zuschlagstoffen, insbesondere beim Aufschmelzvorgang und beim Mischen, und anderseits durch die üblichen Trocknungsmethoden. Je nach den im herstellenden Formkörper geforderten Eigenschaften, wie insbesondere thermische und mechanische Eigenschaften, werden der nativen Stärke vorzugsweise•ca. 10 bis 25% Zuschlagstoff beigegeben, wobei dadurch der Wassergehalt in der Stärke durch das Zusetzen der Zuschlagstoffe verringert wird. Auch kann dadurch die Schmelztemperatur der Stärke wesentlich beeinflusst werden, was sich einerseits auf die Verarbeitung der Stärke und anderseits auf die Wärmeformbeständigkeit der hergestellten Formkörper auswirkt.

Dieser Einfluss wurde je durch Zusetzen von fünf Zuschlagstoffen näher untersucht. Zunächst wurde die native Stärke vollständig getrocknet, damit der Einfluss von Wasser ausgeschlossen werden konnte. Anschliessend wurde der getrockneten Stärke je 10 Gew.% an Zuschlagstoff beigemischt und das Gemisch langsam erwärmt, wobei das Zuführen der Wärme genau verfolgt wurde. Dadurch konnte die thermische

5

Umwandlung des Gemisches genau verfolgt werden und auf den Temperaturbereich geschlossen werden, bei welchem das Gemisch vollständig aufgeschmolzen ist. Als Zuschlagstoffe wurden DMSO, Glycerin, und Aethylenglycol, sowie als Vergleichsversuch Propylenglycol und Butylenglycol verwendet. Die gemessenen thermischen Umwandlungsbereiche und damit der Einfluss der Zuschlagstoffe auf die Schmelztemperatur der Stärke sind in Tabelle I zusammengefasst. Dabei ist ergänzend zu bemerken, dass der untere Beginn eines "Peaks" mit Glasumwandlung in Zusammenhang steht, währenddem ein Aufschmelzen im Bereich am oberen Ende des "Peaks" auftritt.

Von den verwendeten Zuschlagstoffen erniedrigt Aethylenglycol den Schmelzpunkt der Stärke am stärksten, währenddem der Einsatz von Butylenglycol einen relativ hohen Schmelzbereich von ca. 200°C ergibt. Untersucht wurde ebenfalls ein Zusetzen von Propylencarbonat, wobei sich hier die Stärke vor dem Aufschmelzen zersetzte. Die Erniedrigung der Schmelztemperatur hängt offenbar mit der Beeinflussung der Molekularstruktur in der nativen Stärke zusammen, doch wurde dieser Effekt vorderhand nicht näher untersucht.

Wird nun das Gemisch aus Stärke und Zuschlagstoff weiter verarbeitet, so muss beim Homogenisierungsvorgang, d.h. beim Mischen der Schmelze aus Stärke und Zuschlagstoff, auf die resultierende Schmelztemperatur geachtet werden.

So wurden beispielsweise Gemische von Propylenglycol und nativer Stärke mit Anteilen von Propylenglycol im Bereich von 10 bis 20% einem Kneter zugeführt und anschliessend bei 175°C gemischt. Je nach Zuschlagsmenge betrug die Verweilzeit des Gemisches im Kneter 40 bis 100 sec, wobei durch Zumischen von mehr Zuschlagstoff die Verarbeitungstemperatur gesenkt werden konnte, um in der Schmelze ausreichende Homogenität zu erreichen. In einem anderen Beispiel wurde Glycerin zugesetzt, und entsprechend konnte die Verarbeitungstemperatur im Kneter gesenkt werden. Erfahrungsgemäss hat es sich gezeigt, dass der Zusatz von 1% Zuschlagstoff eine Erniedrigung des Schmelzbereiches von ca. 10°C ergibt, resp. dass bei gleicher Schergeschwindigkeit man dieselbe Viskosität des Gemisches bei 1% mehr Zuschlag bereits bei einer Temperatur erreicht, die ca. 10°C tiefer liegt.

Die durchschnittliche Leistung im Kneter betrug bei den oben erwähnten Versuchen ca. 10 kW pro 100 kg Gemisch aus Stärke und Zuschlagstoff. Die Homogenität der Schmelze wurde dadurch geprüft, indem Prüfkörper hergestellt wurden und Zug-/Dehnversuchen unterzogen wurden. In dem Bereich, wo die gemessenen mechanischen Eigenschaften, d.h. die Zugfestigkeit oder Reissfestigkeit, nicht weiter wesentlich verbessert werden konnten, konnte entsprechend auf ausreichende Homogenität der Schmelze geschlossen werden. Aufgrund dieses Zug-/Dehnversuches können ausreichende Referenzdaten erarbeitet werden, um bei einer bestimmten Zusammensetzung der Schmelze aus Stärke und Zuschlagstoff auf die entsprechende Verweilzeit im Extruder oder Kneter schliessen zu können.

Tabelle II zeigt die Homogenisierung von Stärke, durchgeführt bei verschiedenen Homogenisierungsbedingungen und deren Auswirkungen auf die Homogenität der resultierenden thermoplastischen Stärke.

Verwendet wird Kartoffelstärke, wobei die Kartoffelstärke $P_3$ zusammen mit 15% Zuschlagstoff einen Schmelzbereich von ca. 180°C umfasst, und Kartoffelstärke $P_4$ zusammen mit 15% Zuschlagstoff einen Schmelzbereich von ca. 195°C.

In Kol. A wird die Zusammensetzung der Stärke-Zuschlagsmischung angegeben, wobei der Wert A = Gramm Zuschlag pro (Gramm Stärke + Gramm Zuschlag) umfasst. Ein Wert von A = 0,15 bedeutet also 15 Gramm Zuschlagstoff auf 100 Gramm Mischung aus Stärke und Zuschlagstoff. Als Zuschlagstoff wird ein Gemisch der vorab erwähnten, vorzugsweise verwendeten Zuschlagstoffe verwendet, das einen Löslichkeitsparameter von 20 $cal^{1/2}cm^{-3/2}$ bei 150°C beinhaltet.

Die Temperaturen $T_3$ bis $T_6$ stellen Temperatur-Sollwerte der geregelten Temperaturen der einzelnen Zonen der Homogenisierungseinrichtung dar. Als Homogenisierungseinrichtung wird ein Kneter verwendet.

$T_E$ ist gleich der Temperatur der Masse beim Austritt aus dem Kneter.

B gleich Drehzahl der Kneterwelle in (U pro Min.).

C gleich eingebrachte Leistung in die Masse in Form von mechanischer Arbeit in (kW).

D gleich Massefluss im Kneter, d.h. Durchsatz der Schmelze durch den Kneter in (kg/Std.).

E gleich Grenzviskosität der thermoplastischen Stärke nach dem Verlassen des Kneters, gemessen in Lösung in 0,1nKOH bei 60°C nach einer Lösezeit von einer Stunde bei 110°C im Ubelhode-Kapillarviskosimeter, gemessen in ($cm^3$ pro Gramm). Bei E handelt es sich um ein Mass für die Molmasse (M) der thermoplastischen Stärke in (g/Mol). Die dazugehörige Korrelation ist gleich:

E = 0,2 x $M_G^{0,4}$ ($M_G$ = Gewichtsmittel der Molmasse). E der nativen unbehandelten Stärke ist 260, woraus ein Wert für $M_G$ der nativen unbehandelten Stärke von 6 x $10^7$ resultiert.

F bedeutet der kristalline Anteil in Prozent. Mittels der Kristallinität der Stärke kann festgestellt werden, ob die Homogenisierung in ausreichendem Masse erfolgt ist und damit die Stärke thermoplastisch verarbeitbar ist. Native Stärke ist hochkristallin, währenddem thermoplastisch verarbeitbare Stärke praktisch keine kristallinen Anteile mehr umfasst.

Messung des kristallinen Anteils:

Messmethode: Röntgendiffraktion an Pulver,
Messgrösse: Intensität der Streustrahlung als Funktion des Streuwinkels,
Native Kartoffelstärke: scharfe Reflexe bei den Streuwinkeln (Grad) 6, 14, 17, 20, 22, 24, 26,
Mass für die Kristallinität:
Fx = Flächeninhalt der Streuintensität - Streuwinkelfunktion für die scharfen Reflexe der behandelten Stärke,
Fn = Flächeninhalt wie oben für die native unbehandelte Stärke.

$$F = \frac{F_x}{F_n} \cdot 100 \ (\%)$$

Die F-Werte der behandelten Stärke im homogenen thermoplastischen Zustand sind kleiner 5%.

Diskussion von Tabelle II:

Beurteilungskriterium, wie gut oder wie schlecht die Homogenisierung der Stärke erfolgt ist, stellt der Wert F für die kristallinen Anteile dar. Werte zwischen 0 und 5 sind optimal, währenddem Werte grösser als 5% bereits auf eine ungenügende Homogenität der thermoplastischen Stärke schliessen lassen.

Die für E gefundenen Werte, d.h. für die Grenzviskosität, liegen in vernünftigen Rahmen, ergibt doch selbst der niedrigste gefundene Wert für E eine mittlere Molmasse $M_G$ von 1,5 Mio.

Vergleicht man die verschiedenen Werte für A, d.h. für die Zusammensetzung, der Stärkemischungen mit $P_3$ und mit $P_4$, so wird ersichtlich, dass die Werte in einem Bereich von 0,25 bis 0.3 ein Optimum durchlaufen. So ergeben beispielsweise Mischungen aus der Stärke P3 mit A-Werten von 0,35 und 0,4 nach der Homogenisierung immer noch hohe kristalline Anteile, währenddem Werte für A von 0,3 und 0,25 praktisch keine kristallinen Anteile mehr erkennen lassen. Dasselbe Bild ergibt sich im übrigen auch für Stärkemischungen aus Kartoffelstärke P4 mit Zuschlagstoff. Diese Aussage kann natürlich nicht generalisiert werden, hängt doch der Homogenisierungseffekt nicht zuletzt auch von der Zusammensetzung, resp. den Eigenschaften des oder der Zuschlagstoffe ab.

Ein wesentliches Kriterium für die Homogenisierung stellt die eingebrachte Leistung dar, wobei aus den Versuchen deutlich wird, dass, je höher die eingebrachte Leistung in den Kneter ist, um so besser die Homogenisierung der Stärke erfolgt. Diese lässt sich beispielsweise aus den Proben 3a, 3b und 3c erkennen, wo die Homogenisierung praktisch im gleichen Temperaturbereich erfolgt, und wo auch die Zusammensetzung des Stärkegemisches gleich ist, nämlich mit einem Wert von A = 0,35. Einen selben Effekt lässt sich auch aus dem Vergleich der Proben 9 und 10 ableiten, wo Probe 10 mit einer höheren eingebrachten Leistung in den Kneter eine ausreichende Homogenität ergibt, währenddem Probe 9 einen Kristallinitätsanteil von 25% aufweist.

Für das Erreichen einer ausreichenden Homogenität in der thermoplastischen Stärke ist auch die Wahl der Temperaturen in der Homogenisierungseinrichtung wesentlich, was sich z.B. aus einem Vergleich der Proben 5a und 5b ergibt. So ergibt beispielsweise die Probe 5b eine bessere Homogenität, obwohl weniger Leistung in den Kneter eingebracht worden ist. Die bessere Homogenität resultiert hier weitgehendst aus den deutlich höher gewählten Temperaturen im Kneter.

Die in der Tabelle II angeführten Messwerte zeigen aber deutlich, dass keine Aussage über Zusammensetzung, gewählte Temperaturen im Kneter und eingebrachte Leistung generalisiert werden kann. Es ist daher bei jeder gewählten Stärke/Zuschlagstoffmischung eine Aufgabe, die Prozessführung zum Erhalt einer thermoplastischen Stärke zu optimieren. Wesentlich ist ja schlussendlich auch die Frage, ob man eine hohe oder eine tiefe Molmasse einstellen möchte. Diese Frage richtet sich ja schlussendlich nach den Bedürfnissen, ob die thermoplastische Stärke für Spritzguss oder aber für Extrusion verwendet werden soll. Bekanntlich eignen sich höher viskose Polymere eher für Extrusion, währenddem tiefer viskose Polymere eher für Spritzguss verwendet werden.

7

Zurückkommend auf die Homogenisierung der Stärke muss auch erwähnt werden, dass selbstverständlich die Verweilzeit des Materials in der Homogenisierungsvorrichtung resp. dem Kneter die Homogenität des Materials beeinflussen kann.

Kommentar zu Tabelle III:

In Tabelle III dargestellt ist der Einfluss der Homogenität resp. der Kristallinität der thermoplastischen Stärke auf mechanische Eigenschaften anhand der beispielsweisen Darstellung des Einflusses auf Dehnung und Bruchverhalten der Stärke.

Bei der Probe I handelt es sich um Prüfkörper aus thermoplastischem Stärkematerial, das ausreichend oder nahezu ideal homogenisiert ist, und entsprechend thermoplastisch verarbeitbar ist. Bei der Probe II handelt es sich um eine Stärkeprobe, die ungenügend homogenisiert ist und entsprechend einen zu hohen Kristallinitätsanteil umfasst.

Die Kolonne Modul umfasst den Elastizitätsmodul der beiden Materialien, der interessanterweise für die beiden Materialien praktisch gleich ist. Die Kolonne A umfasst die Zusammensetzung der Proben, die Kolonne E wie in Tabelle II die Grenzviskosität der Proben und die Kolonne F den Wert für den kristallinen Anteil.

G bedeutet relative Dehnung des Materials bei Bruch in (%) und H steht für den Energieaufwand, welcher bis zum Bruch des Materials dem Material zugeführt wurde. Die Dimension von H ist (KJ/m2).

In der Zeile I sind die Werte von verschiedenen Messungen für Proben I zusammengefasst, die einen kristallinen Anteil in der Grössenordnung von 0 bis max. 5% umfassen. Es handelt sich hierbei also um Materialien, die nahezu ideal homogenisiert sind und entsprechend thermoplastisch einwandfrei verarbeitbar sind.

Entsprechend sind in der Zeile II verschiedene Messungen für Materialien II zusammengefasst, die unzureichend homogenisiert sind.

Aus der Kolonne G lässt sich deutlich ableiten, dass die Stärkematerialien aus Zeile II wesentlich brüchiger sind als die Materialien in der Zeile I. Auch muss den Stärrematerialien gemäss Zeile I wesentlich mehr Energie entsprechend Kolonne H zugeführt werden, um sie bis zum Bruch zu dehnen.

Aufgrund dieser Zug/Dehnungsversuche, die in Tabelle III numerisch dargestellt sind, lässt sich deutlich die Verbesserung der mechanischen Eigenschaften von thermoplastisch verarbeitbarer Stärke erkennen. Aufgrund der Reduktion der Kristallinität des Materials unter 5% erhält man so Stärkematerialien, mit ausreichenden bis guten mechanischen Eigenschaften. Diese mechanischen Eigenschaften können natürlich durch die Menge Zuschlagstoff und durch geeignete Wahl von Additiven weiter verbessert werden.

Da offensichtlich Scherkräfte in der Schmelze des Gemisches aus Stärke und Zuschlagstoff für den Homogenisierungseffekt verantwortlich sind und damit zu einem Material kleiner Kristallinität führen, soll näher auf den Zusammenhang zwischen der Scherviskosität der Schmelze und der Scherwirkung der Homogenisierungsvorrichtung eingegangen werden. Hierzu wird die Strukturviskosität der Stärkeschmelze, d.h. die Abhängigkeit der Scherviskosität von der Schergeschwindigkeit in einem Kapillarrheometer untersucht. Als Korrelation zwischen den beiden Grössen wurde die folgende Gleichung gefunden:

$$\eta = K \bullet \dot{\gamma}^{(1-m)}$$

Dabei bedeutet $\eta$ die Scherviskosität der Schmelze in (Pa x sec) und $\dot{\gamma}$ die Schergeschwindigkeit in (sec$^{-1}$). Bei K handelt es sich um eine Materialkonstante, die gelegentlich auch Konsistenz genannt wird. K errechnet sich aus folgender Gleichung:

$$K = \exp\left[\frac{E_A}{R}\left(\frac{1}{T} - \frac{1}{T_O}\right) - a(A - A_O)\right]$$

Für den Term

$$E_A / R$$

8

wurde der Wert von 5,52 x 10⁴ (Grad Kelvin) gefunden, wobei R = der Gaskonstanten ist; und $^{E}A$ = thermische Aktivierungsenergie des Platzwechselvorganges der Moleküle beim Fliessen der Schmelze.

Bei T handelt es sich um die Temperatur der Schmelze (in Grad Kelvin) und bei To um eine Referenztemperatur von 458 Grad Kelvin.

a ist ebenfalls eine Konstante mit dem Wert $2,76 \times 10^2$ und bei A handelt es sich ja bekanntlich um die Zusammensetzung der Stärke/Zuschlagstoffmischung. Ao stellt die Zusammensetzung einer Referenzmischung dar mit dem Wert von A = 0,1.

Dabei zeigt sich jetzt nun, dass der Term m eine Funktion der Temperatur der Schmelze und der Zusammensetzung des Stärke/Zuschlagstoffgemisches ist.

In Tabelle IV sind Werte von m in Abhängigkeit von T (Grad Kelvin) und von A angeführt, wobei diese Werte dadurch erhalten wurden, indem bei vorgegebenem $\dot{\gamma}$, d.h. der Schergeschwindigkeit, in der Messvorrichtung sich die Scherviskosität entsprechend eingestellt hat. Fur m ergibt sich somit eine Funktion der allgemeinen Formel: $m = (g(T) + f(A) + r(T, A))$.

Die Werte aus Tabelle IV unterstreichen den bereits vermuteten Tatbestand, dass bei erhöhter Temperatur der Schmelze die Schergeschwindigkeit reduziert werden kann, um dieselbe Scherviskosität in der Schmelze zu erhalten, und bei erhöhtem Zuschlagstoffanteil die Temperatur der Schmelze reduziert werden kann, um dieselbe Scherviskosität in der Schmelze zu erhalten.

Die nun so homogenisierte Stärke oder besser thermoplastische Stärke kann anschliessend direkt gemäss den üblichen Kunststoffverarbeitungsmethoden weiter verarbeitet werden, wie durch Spritzgiessen, Extrudieren, Folienblasen, Spritzblasen, Tiefziehen usw. Dabei muss allerdings insbesondere beim Extrudieren, Folienblasen, Spritzblasen etc. darauf geachtet werden, dass der Zuschlagstoff einen Dampfdruck aufweist, der deutlich unter 1 bar liegt bei der Temperatur, mit welcher die Schmelze die Düse am Extruder verlässt. Dasselbe gilt auch in bezug auf den Wassergehalt in der Schmelze, der nicht zu hoch sein darf. Es ist daher weiter zu beachten, dass genügend Zuschlagstoff in der Schmelze ist, der das Wasser verdrängt respektive ersetzt. Bei zu hohem Wassergehalt oder bei Verwendung eines Zuschlagstoffes mit einem zu hohen Dampfdruck schäumt das Material beim Verlassen aus der Düse auf.

Durch weiteres Zugeben von Additiven wie vorab beschrieben können die Eigenschaften der Formkörper und Extrudate weiter wesentlich beeinflusst werden. So kann beispielsweise durch Zusetzen von inorganischen Füllstoffen, wie Magnesiumoxid, Aluminium, Silicon usw., die Transparenz verringert oder ganz verhindert werden. Zusätze von pflanzlichen oder tierischen Fetten verbessern die Fliesseigenschaften der Schmelze respektive dienen zur Verbesserung der Entformbarkeit. Die Eigenschaftsbeeinflussung ist allerdings nicht primär Gegenstand der vorliegenden Erfindung, so dass auf eine nähere Umschreibung dieses Sachverhaltes verzichtet wird.

Ein weiterer wesentlicher Aspekt besteht im Zusetzen von Vernetzungsmitteln zur Stärke, da Formkörper und Extrudate aus reiner Stärke aufgrund der Hydrophilie nicht wasserbeständig sind. Durch das Zusetzen von Vernetzungsmitteln und sonstigen chemischen Modifizierungsmitteln werden Teile aus Stärke wenigstens teilweise oder nahezu vollständig wasserbeständig und können so in der Praxis problemlos verwendet werden. Die Wahl und die Zusetzung eines der vorab erwähnten Vernetzungsmittel hängt im wesentlichen vom Zuschlagstoff und dessen Zuschlagsmenge zur nativen Stärke ab, wobei auch die Additive eine Rolle spielen können. Temperatur und Verweilzeit im Extruder, d.h. beim Aufschmelzen, Homogenisieren und Verarbeiten, sind daher die wesentlichen Kriterien für den zu wählenden Vernetzertyp. Grundsätzlich darf während der Verarbeitung der Stärke die Vernetzung nicht so weit einsetzen, dass dadurch die Thermoplastizität derart beeinflusst wird, dass ein Verarbeiten problematisch wird. Dieser Sachverhalt ist aber von der Verarbeitung von teilweise vernetzbaren Thermoplasten, von der Herstellung von Pulverlacken usw. in der Praxis bestens bekannt, so dass nicht weiter darauf eingegangen werden muss.

Die vorab erwähnten beispielsweise verwendeten Zuschlagstoffe und Verarbeitungsbedingungen dienten nur zur näheren Erläuterung der Erfindung und können entsprechend den Erfordernissen in einer x-beliebigen Art und Weise durch Verwendung anderer Materialien und Verarbeitungsbedingungen variiert werden. Wesentlich dabei ist, dass durch das Zusetzen eines Zuschlagstoffes zur nativen Stärke und des Mischens dieser beiden Materialien in der Schmelze eine thermoplastisch verarbeitbare Stärke geschaffen werden kann. Wesentlich ist weiter, dass der Zuschlagstoff eine Kohäsionsenergiedichte aufweist, die es ihm ermöglicht, die Molekularstruktur der nativen Stärke derart zu beeinflussen, dass die thermoplastische Verarbeitbarkeit derselben erreicht werden kann. Schlussendlich besteht eine weitere Forderung darin, dass der Dampfdruck der Zuschlagstoffe, mindestens bei offener Verarbeitung im Verarbeitungstemperaturbereich kleiner 1 bar ist.

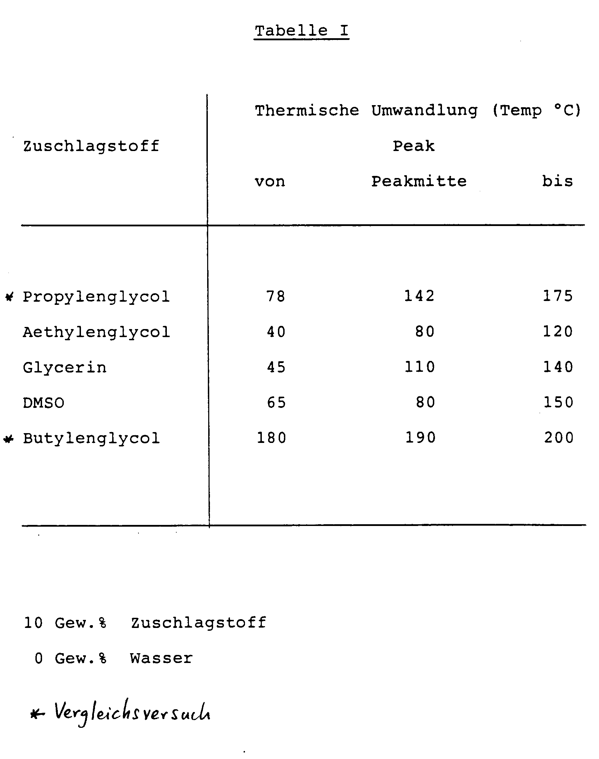

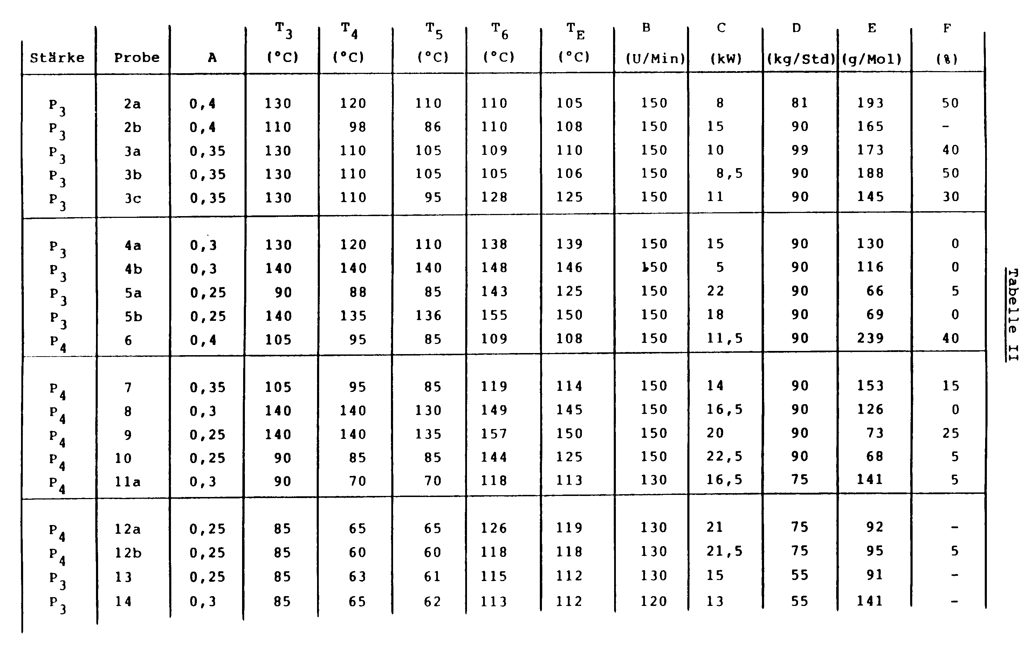

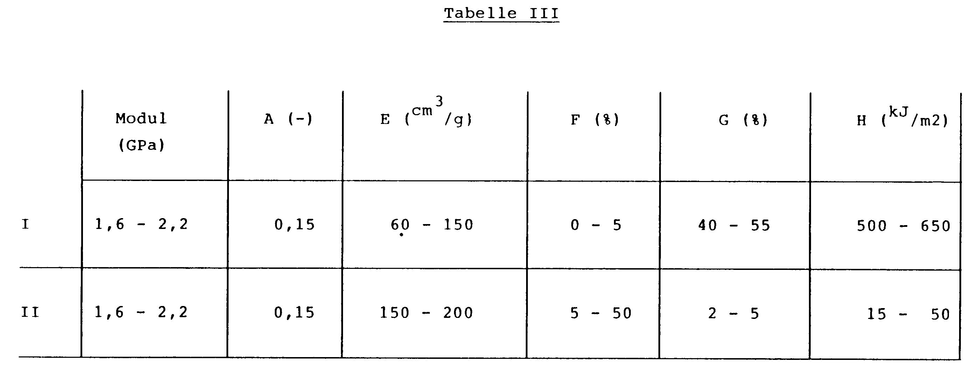

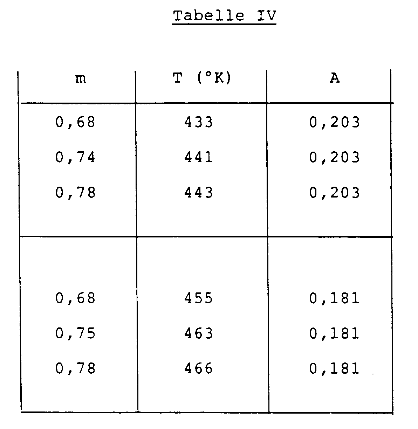

## Patentansprüche

1. Verfahren zur Herstellung von thermoplastisch verarbeitbarer, homogener Stärke, mit einem kristallinen Anteil in der Stärke von weniger als 5% dadurch gekennzeichnet, dass native oder natürliche Stärke zusammen mit mindestens 10Gew%, bezogen auf das Gesamtgewicht der Mischung von Stärke und Zuschlagstoff, von einem Zuschlagstoff gemischt und durch Zuführen von Wärme in Schmelze gebracht wird, wobei der Zuschlagstoff einen Löslichkeitsparameter, von grösser als 30,7 (MPa)$^{1/2}$ ( = 15(cal$^{1/2}$ • cm$^{-3/2}$)) aufweist und beim Mischen mit der Stärke deren Schmelzpunkt derart erniedrigt, dass die Schmelztemperatur der Stärke/Zuschlagstoffmischung unterhalb der Zersetzungstemperatur der Stärke liegt, und wobei der Dampfdruck des oder der Zuschlagstoffe(s) in der Mischung zusammen mit der Stärke im Schmelztemperaturbereich der homogenen Mischung kleiner als 1bar ist, und dass der Wassergehalt der Stärke in der Schmelze auf unter 5% reduziert wird.

2. Verfahren nach Anspruch 1, dadurch gekennzeichnet, dass durch Zusetzen von Zuschlagstoff(en), beim Aufschmelzen und beim Mischen, der an sich in der Stärke naturgemäss vorliegende Gehalt an Wasser von ca. 17% entfernt wird.

3. Verfahren nach Anspruch 1 oder 2, dadurch gekennzeichnet, dass die Stärke vor dem Mischen mit dem mindestens einen Zuschlagstoff vollständig getrocknet wird.

4. Verfahren nach einem der Ansprüche 1 bis 3, dadurch gekennzeichnet, dass als Zuschlagstoff mindestens eine der nachfolgenden Substanzen verwendet wird:
Glycerin, Formamid oder N-Methylformamid.

5. Verfahren nach einem der Ansprüche 1 bis 4, dadurch gekennzeichnet, dass die Stärke mit 10 bis 35Gew%, bezogen auf das Gesamtgewicht der Mischung, mit Zuschlagstoff gemischt, aufgeschmolzen und anschliessend so lange gemischt wird, bis die Schmelze homogen ist.

6. Verfahren nach einem der Ansprüche 1 bis 5, dadurch gekennzeichnet, dass die Durchmischung und Homogenisierung der Stärkeschmelze mit dem Zuschlagstoff in einem Temperaturbereich von 120 bis 220°C erfolgt.

7. Verfahren nach einem der Ansprüche 1 bis 6, dadurch gekennzeichnet, dass die Stärke mit 10 bis 35Gew%, bezogen auf das Gesamtgewicht der Mischung, mit Glycerin gemischt und aufgeschmolzen wird.

8. Verfahren nach einem der Ansprüche 1 bis 7, dadurch gekennzeichnet, dass die Stärke mit mindestens einem Zuschlagstoff gemischt und aufgeschmolzen wird, der einen Löslichkeitsparameter in einem Temperaturbereich von 100 bis 300°C von 30,7 bis 51,0 (MPa)$^{1/2}$ ( = 15-25(cal$^{1/2}$ • cm$^{-3/2}$)) aufweist und dessen Grenzflächenenergie zur Stärke nicht grösser ist als 20% der einzelnen Grenzflächenenergien von Stärke und Zuschlagstoff gegenüber Luft.

9. Verfahren nach einem der Ansprüche 1 bis 8, dadurch gekennzeichnet, dass die natürliche oder native Stärke zusammen mit dem mindestens einen Zuschlagstoff in einer Kunststoffverarbeitungsmaschine, wie einem Ein- oder Zweiwellenextruder und einem Kneter, zugeführt werden, aufgeschmolzen werden und zu einer homogenen thermoplastischen Masse gemischt werden.

10. Verfahren nach einem der Ansprüche 1 bis 9, dadurch gekennzeichnet, dass als ein Plastifiziermittel, ein Polyalkylenoxid, Glycerin,> Glycerinmono- oder diacetat, Sorbitol oder ein Citrat mit einer Konzentration im Bereich von 0,5 bis 15Gew%, bezogen auf das Gesamtgewicht, verwendet wird.

11. Verfahren nach einem der Ansprüche 1 bis 10, dadurch gekennzeichnet, dass der Stärke/Zuschlagstoffmischung mindestens eines der nachfolgenden Materialien als Füllstoff zugesetzt wird:
    - ein anderes Polysaccharid,
    - ein Derivat der Cellulose,
    - ein in einem Zuschlagstoff für die Stärke löslichen synthetischen Polymer,
    - ein Gelatinephthalat,
    wobei dem Gemisch aus Stärke und Zuschlagstoff zwischen mehr als 0 bis 50Gew% an Füllstoff, bezogen auf das Gewicht der Gesamtmischung, beigemischt wird.

12. Verfahren nach Anspruch 11, dadurch gekennzeichnet, dass der Stärke/Zuschlagstoffmischung 3 bis 10Gew%, bezogen auf das Gesamtgewicht, an Füllstoff zugemischt wird.

13. Verfahren nach einem der Ansprüche 1 bis 12, dadurch gekennzeichnet, dass der Stärke/Zuschlagstoffmischung mindestens ein anorganischer Füllstoff in einer Konzentration von 0,02 bis 3Gew%, bezogen auf das Gesamtgewicht, beigemischt wird.

14. Verfahren nach einem der Ansprüche 1 bis 13, dadurch gekennzeichnet, dass der Stärke/Zuschlagstoffmischung 0,02 bis 3Gew%, bezogen auf das Gesamtgewicht, an Magnesiumoxid beigemischt wird.

15. Verfahren nach einem der Ansprüche 1 bis 14, dadurch gekennzeichnet, dass ein organisches oder anorganisches Pigment mit einer Konzentration in der Grössenordnung von 0,001 bis 10Gew%, bezogen auf das Gesamtwicht, verwendet wird.

16. Verfahren nach einem der Ansprüche 1 bis 14, dadurch gekennzeichnet, dass ein organisches oder anorganisches Pigment mit einer Konzentration in der Grössenordnung von 0,5 bis 3Gew%, bezogen auf das Gesamtgewicht, verwendet wird.

17. Verfahren nach einem der Ansprüche 1 bis 16, dadurch gekennzeichnet, dass als ein Mittel zur Verbesserung der Fliesseigenschaft, ein tierisches oder pflanzliches Fett, ein Lecithin, vorzugsweise in hydrogenierter Form, verwendet wird, wobei diese Fette und sonstigen Fettsäurederivate einen Schmelzpunkt grösser als 50°C haben.

18. Verfahren nach einem der Ansprüche 1 bis 17 zur Herstellung von mindestens teilweise vernetzter Stärke, dadurch gekennzeichnet, dass mindestens ein Vernetzungsmittel der Mischung aus Stärke und Zuschlagstoff zugesetzt wird.

19. Verfahren nach einem der Ansprüche 1 bis 18, dadurch gekennzeichnet, dass als Vernetzungsmittel mindestens eine der nachfolgenden Substanzen verwendet wird:
    - eine zwei- oder mehrwertige Karbonsäure und/oder ein Anhydrid davon,
    - ein Halogenid und/oder ein Säureamid einer zwei- oder mehrwertigen Karbonsäure,
    - ein Derivat einer zwei- oder mehrwertigen anorganischen Säure,
    - ein Epoxid, wie ein mehrwertiger Glycidaether,
    - Formaldehyd und/oder ein Harnstoffderivat,
    - ein Isocyanat,
    - eine Oxoverbindung, wie Acetonformaldehyd oder eine mehrwertige Oxoverbindung,
    - Cyanamid.

20. Verfahren zur Herstellung von Granulaten, Schuppen, Pillen, Pulver, Tabletten oder Fasern aus thermoplastisch verarbeitbarer, homogener Stärke, unter Verwendung des Verfahrens nach einem der Ansprüche 1 bis 19.

21. Verfahren zur Herstellung von Formkörpern, Extrudaten oder Folien aus thermoplastisch verarbeitbarer, homogener Stärke, unter Verwendung des Verfahrens nach einem der Ansprüche 1 bis 20, dadurch gekennzeichnet, dass die homogene Stärke/Zuschlagstoffschnelze direkt verarbeitet wird.

22. Thermoplastisch verarbeitbare homogene Stärke mit einem kristallinen Anteil in der Stärke von weniger als 5%, erhältlich mittels eines Verfahrens nach einem der Ansprüche 1 bis 21.

23. Thermoplastisch verarbeitbare Stärke nach dem Anspruch 22, dadurch gekennzeichnet, dass das Grenzviskositätsmittel des Molekulargewichtes der Stärke im Bereich von 3 Mio. bis 10 Mio. liegt.

24. Thermoplastisch verarbeitbare Stärke nach einem der Ansprüche 22 und 23, dadurch gekennzeichnet, dass sie in Form von Granulaten, Schuppen, von Pillen und/oder Tabletten oder als Pulver oder in Form von Fasern vorliegt.

**EP 0 397 819 B1**

**25.** Thermoplastisch verarbeitbare Stärke nach einem der Ansprüche 22 bis 24, dadurch gekennzeichnet, dass der den polaren Wechselwirkungen entsprechende Anteil $\delta p$ und der den Wasserstoffbrückenbindungen entsprechende Anteil $\delta h$ des Löslichkeitsparameters $\delta$ des mindestens einen Zuschlagstoffes grösser sind als der den Dispersionskräften entsprechende Anteil $\delta d$ des Löslichkeitsparameters $\delta$ des mindestens einen Zuschlagstoffes.

**26.** Formkörper, aus thermoplastisch verarbeitbarer, homogener Stärke, nach einem der Ansprüche 22 bis 25.

**27.** Verwendung der thermoplastisch verarbeitbaren Stärke nach einem der Ansprüche 22 bis 25 als Füllstoff für das Füllen und/oder Formulieren von thermoplastischen oder duroplastischen Polymeren.

**28.** Verwendung der thermoplastisch verarbeitbaren, homogenen Stärke nach einem der Ansprüche 22 bis 25 als Trägermaterial für das Aufnehmen von Wirkstoffen und/oder Reaktionsmitteln.

**29.** Verwendung der thermoplastisch verarbeitbaren, homogenen Stärke nach einem der Ansprüche 23 bis 25 zum Binden von Wasser in wasserarmer Umgebung und/oder auf einer wasserdurchlässigen Unterlage, wobei die Stärke in Form einer Folie, eines Netzwerkes oder eines sonstigen Extrudates verwendet wird.

**Claims**

**1.** Process for manufacturing homogeneous starch having a crystalline content of less than 5 % and capable of being subjected to thermoplastic processing, characterised in that native or natural starch is mixed with at least 10 % by weight of an additive, compared to the total weight of the starch/additive mixture, and is formed into a melt by the application of heat, wherein the additive has a solubility parameter of more than 30.7 (MPa)$^{1/2}$ ($= 15$(cal$^{1/2}$ . cm$^{-3/2}$)) and when mixed with the starch lowers its melting point so that the melting temperature of the starch/additive mixture is below the decomposition temperature of the starch, and the vapour pressure of the additive(s) in the mixture together with the starch in the melting temperature range of the homogeneous mixture is less than 1 bar, and in that the water content of the starch in the melt is reduced to less than 5 %.

**2.** Process according to claim 1, characterised in that the water content of approx. 17 % naturally occurring in the starch is removed by the addition of an additive or additives during melting and mixing.

**3.** Process according to claim 1 or 2, characterised in that the starch is completely dried before mixing with at least one additive.

**4.** Process according to one of claims 1 to 3, characterised in that at least one of the following substances is used as an additive: glycerol, formamide or N-methylformamide.

**5.** Process according to one of claims 1 to 4, characterised in that the starch is mixed with additive in a quantity of 10 to 35 % by weight of the total weight of the mixture, is melted down and then mixed until the melt is homogeneous.

**6.** Process according to one of claims 1 to 5, characterised in that mixing and homogenisation of the starch melt with the additive is carried out in a temperature range of 120 to 220°C.

**7.** Process according to one of claims 1 to 6, characterised in that the starch is mixed with glycerol in a quantity of 10 to 35 % by weight of the total weight of the mixture and is melted down.

**8.** Process according to one of claims 1 to 7, characterised in that the starch is mixed with at least one additive and melted down, the additive having a solubility parameter in a temperature range of 100 to 300°C of 30.7 to 51.0 (MPa) ($= 15$-$25$(cal$^{1/2}$ . cm$^{-3/2}$)) and its interfacial energy relative to the starch is not greater than 20 % of the individual interfacial energies of the starch and additive relative to air.

**9.** Process according to one of claims 1 to 8, characterised in that the natural or native starch and at least one additive are fed together into a plastics processing machine, such as a single- or double-shaft

12

extruder and a kneader, are melted down and are mixed into a homogeneous thermoplastic compound.

10. Process according to one of claims 1 to 9, characterised in that as a plastifier, a polyalkyl oxide, glycerol, glycerol monoacetate or diacetate, sorbitol or a citrate is used in a concentration in the range of 0.5 to 15 % by weight of the total weight of the mixture.

11. Process according to one of claims 1 to 10, characterised in that at least one of the following materials are added as a filler to the starch/additive mixture:
   - another polysaccharide,
   - a cellulose derivative,
   - a synthetic polymer soluble in an additive for starch,
   - a gelatin phthalate,
more than 0 to 50 % by weight relative to the total mixture of a filler being added to the starch/additive mixture.

12. Process according to claim 11, characterised in that filler is added to the starch/additive mixture in a proportion of 3 to 10 % by weight of the total mixture.

13. Process according to one of claims 1 to 12, characterised in that at least one inorganic filler is added to the starch/additive mixture in a concentration of 0.02 to 3 % by weight of the total mixture.

14. Process according to one of claims 1 to 13, characterised in that magnesium oxide is added to the starch/additive mixture in a proportion of 0.02 to 3 % by weight of the total mixture.

15. Process according to one of claims 1 to 14, characterised in that an organic or inorganic pigment is used in a concentration of the order of 0.001 to 10 % by weight relative to the total weight.

16. Process according to one of claims 1 to 14, characterised in that an organic or inorganic pigment is used in a concentration of the order of 0.5 to 3 % by weight relative to the total weight.

17. Process according to one of claims 1 to 16, characterised in that, as a means of improving the flow properties, an animal or vegetable fat, a lecithin, preferably in hydrogenated form, is used, these fats and other fatty acid derivatives having a melting point of more than 50°C.

18. Process according to one of claims 1 to 17 for the manufacture of at least partly cross-linked starch, characterised in that at least one cross-linking agent is added to the starch/additive mixture.

19. Process according to one of claims 1 to 18, characterised in that as a cross-linking agent at least one of the following substances is used:
   - a divalent or polyvalent carbonic acid and/or an anhydride thereof,
   - a halogenide and/or an acid amide of a divalent or polyvalent carbonic acid,
   - a derivative of a divalent or polyvalent inorganic acid,
   - an epoxide, such as a multivalent glycidyl ether,
   - formaldehyde and/or a urea derivative,
   - an isocyanate,
   - an oxo- compound, such as acetone formaldehyde or a multivalent oxo-compound,
   - cyanamide.

20. Process for manufacturing granules, flakes, pills, powder, tablets or fibres from homogeneous starch capable of being subjected to thermoplastic processing, using the process according to one of claims 1 to 19.

21. Process for manufacturing moulded bodies, extrudates or sheets from homogeneous starch capable of being subjected to thermoplastic processing, using the process according to one of claims 1 to 20, characterised in that the homogeneous starch/additive melt is processed direct.

22. Homogeneous starch having a crystalline content of less than 5 % and capable of being subjected to thermoplastic processing, obtainable by means of a process according to one of claims 1 to 21.

**23.** Starch capable of being subjected to thermoplastic processing according to claim 22, characterised in that the limit viscosity mean of the molecular weight of the starch is in the range of 3 million to 10 million.

**24.** Starch capable of being subjected to thermoplastic processing according to claim 22 and 23, characterised in that it is present in the form of granules, flakes, pills and/or tablets, or as a powder, or in the form of fibres.

**25.** Starch capable of being subjected to thermoplastic processing according to one of claims 22 to 24, characterised in that the part δp of the solubility parameter δ of the at least one additive corresponding to polar exchange reactions and the part δh corresponding to hydrogen bridge-ring structures are larger than the part δd of the solubility parameter δ of the at least one additive.

**26.** Moulded body composed of homogeneous starch capable of being subjected to thermoplastic processing according to one of claims 22 to 25.

**27.** Use of the starch capable of being subjected to thermoplastic processing according to one of claims 22 to 25 as a filler for filling and/or formulating thermoplastic or duroplastic polymers.

**28.** Use of the homogeneous starch capable of being subjected to thermoplastic processing according to one of claims 22 to 25 as a support material for receiving additives and/or reagents.

**29.** Use of the homogeneous starch capable of being subjected to thermoplastic processing according to one of claims 23 to 25 for bonding water in a water-depleted environment and/or to a water-permeable substrate, wherein the starch is used in the form of a sheet, a mesh or other extrudate.

**Revendications**

**1.** Procédé pour la fabrication d'amidon homogène apte à subir une transformation thermoplastique et contenant une proportion cristalline d'au moins 5 %, caractérisé en ce qu'on mélange de l'amidon natif ou naturel avec au moins 10% en poids d'une matière de charge, par rapport au poids total du mélange d'amidon et de matière de charge, et on le fait fondre en amenant de la chaleur, étant précisé que la matière de charge présente un paramètre de solubilité supérieur à 30,7 $(MPa)^{1/2}$ (= 15-$(cal^{1/2}.cm^{-3/2})$), que lors du mélange avec l'amidon, le point de fusion de celui-ci est abaissé de telle sorte que la température de fusion du mélange amidon/matière de charge est située au-dessous de la température de décomposition de l'amidon, et que dans la plage de température de fusion du mélange homogène, la pression de vapeur de la ou des matières de charge dans le mélange d'amidon est inférieure à 1 bar, et en ce que la teneur en eau de l'amidon dans la matière fondue est réduite à moins de 5 %.

**2.** Procédé selon la revendication 1, caractérisé en ce qu'en ajoutant une ou plusieurs matières de charge lors de la fusion et du mélange, on supprime la teneur en eau d'environ 17 % naturellement présente dans l'amidon.

**3.** Procédé selon la revendication 1 ou 2, caractérisé en ce que l'amidon, avant d'être mélangé à la (aux) matière(s) de charge, est complètement séché.

**4.** Procédé selon l'une des revendications 1 à 3, caractérisé en ce qu'on utilise comme matière de charge l'une au moins des substances suivantes : glycérine, formamide ou N-méthylformamide.

**5.** Procédé selon l'une des revendications 1 à 4, caractérisé en ce que l'amidon est mélangé et fondu avec 10 à 35 % en poids de matière de charge par rapport au poids total du mélange, puis mélangé jusqu'à ce que la matière fondue soit homogène.

**6.** Procédé selon l'une des revendications 1 à 5, caractérisé en ce que le mélange et l'homogénéisation de l'amidon fondu avec la matière de charge se font dans une plage de température de 120 à 220°C.

7. Procédé selon l'une des revendications 1 à 6, caractérisé en ce que l'amidon est mélangé et fondu avec 10 à 35 % en poids de glycérine par rapport au poids total du mélange.

8. Procédé selon l'une des revendications 1 à 7, caractérisé en ce que l'amidon est mélangé et fondu avec au moins une matière de charge qui présente un paramètre de solubilité de la matière de charge dans une plage de température de $100\,°C$ à $300\,°C$ de 30,7 à 51,0 $(MPa)^{1/2}$ ($= 15\text{-}25\ cal^{1/2}.cm^{-3/2}$) et dont l'énergie superficielle libre différentielle par rapport à l'amidon n'est pas supérieure à 20 % des énergies superficielles libres différentielles individuelles de l'amidon et de la matière de charge par rapport à l'air.

9. Procédé selon l'une des revendications 1 à 8, caractérisé en ce que l'amidon naturel ou natif est amené avec la ou les matières de charge dans une machine de transformation de matière plastique telle qu'une extrudeuse à un ou deux cylindres et dans un malaxeur, il est fondu et mélangé pour former une masse thermoplastique homogène.

10. Procédé selon l'une des revendications 1 à 9, caractérisé en ce qu'on utilise comme plastifiant un poly-(oxyde d'alkylène), de la glycérine, du mono- ou du diacétate de glycérine, du sorbitol ou un citrate, suivant une concentration située dans une plage de 0,5 à 15 % en poids par rapport au poids total.

11. Procédé selon l'une des revendications 1 à 10, caractérisé en ce qu'on ajoute au mélange amidon/matière de charge l'un au moins des matériaux suivants, comme matière de remplissage :
    - un autre polysaccharide,
    - un dérivé de la cellulose,
    - un polymère synthétique soluble dans une matière de charge pour l'amidon,
    - un phtalate de gélatine,
    étant précisé qu'on ajoute au mélange d'amidon et de matière de charge plus de 0 à 50 % en poids de matière de remplissage par rapport au poids du mélange total.

12. Procédé selon la revendication 11, caractérisé en ce qu'on ajoute au mélange amidon/matière de charge 3 à 10 % en poids de matière de remplissage par rapport au poids total.

13. Procédé selon l'une des revendications 1 à 12, caractérisé en ce qu'on ajoute au mélange amidon/matière de charge au moins une matière de remplissage inorganique suivant une concentration de 0,02 à 3 % en poids par rapport au poids total.

14. Procédé selon l'une des revendications 1 à 13, caractérisé en ce qu'on ajoute au mélange amidon/matière de charge 0,02 à 3 % en poids d'oxyde de magnésium par rapport au poids total.

15. Procédé selon l'une des revendications 1 à 14, caractérisé en ce qu'on utilise un pigment organique ou inorganique suivant une concentration de l'ordre de 0,001 à 10 % en poids, par rapport au poids total.

16. Procédé selon l'une des revendications 1 à 14, caractérisé en ce qu'on utilise un pigment organique ou inorganique suivant une concentration de l'ordre de 0,5 à 3 % en poids, par rapport au poids total.

17. Procédé selon l'une des revendications 1 à 16, caractérisé en ce qu'on utilise, comme agent pour améliorer la propriété d'écoulement, une graisse animale ou végétale, une lécithine de préférence sous une forme hydrogénée, ces graisses et autres dérivés d'acides gras ayant un point de fusion supérieur à $50\,°C$.

18. Procédé selon l'une des revendications 1 à 17 pour la fabrication d'amidon au moins partiellement réticulé, caractérisé en ce qu'on ajoute au moins un agent de réticulation au mélange d'amidon et de matière de charge.

19. Procédé selon l'une des revendications 1 à 18, caractérisé en ce qu'on utilise comme agent de réticulation l'une au moins des substances suivantes :
    - un acide dicarboxylique et polycarboxylique et/ou un de ses anhydrides,
    - un halogénure et/ou un amide d'un acide dicarboxylique ou polycarboxylique,
    - un dérivé d'un diacide ou d'un polyacide inorganique,

15

- un époxyde tel qu'un polyéther de glycide,
- un formaldéhyde et/ou un dérivé d'urée,
- un isocyanate,
- un composé oxo comme l'acétone-formaldéhyde ou un composé polyoxo,
- un cyanamide.

20. Procédé pour la fabrication de granulés, de flocons, de pilules, de poudre, de comprimés ou de fibres à partir d'un amidon homogène apte à subir une transformation thermoplastique, à l'aide du procédé selon l'une des revendications 1 à 19.

21. Procédé pour la fabrication de produits moulés, de produits extrudés ou de feuilles à partir d'un amidon homogène apte à subir une transformation thermoplastique, à l'aide du procédé selon l'une des revendications 1 à 20, caractérisé en ce que le mélange homogène fondu amidon/matière de charge est transformé directement.

22. Amidon homogène apte à subir une transformation thermoplastique, contenant une proportion cristalline inférieure à 5 %, que l'on peut obtenir à l'aide d'un procédé selon l'une des revendications 1 à 21.

23. Amidon apte à subir une transformation thermoplastique selon la revendication 22, caractérisé en ce que la viscosité limite moyenne du poids moléculaire de l'amidon se situe dans une plage allant de 3 à 10 millions.

24. Amidon apte à subir une transformation thermoplastique selon l'une des revendications 22 et 23, caractérisé en ce qu'il se présente sous la forme de granulés, de flocons, de pilules et/ou de comprimés, de poudre ou de fibres.

25. Amidon apte à subir une transformation thermoplastique selon l'une des revendications 22 à 24, caractérisé en ce que la part $\delta_p$ correspondant aux interactions polaires et la part $\delta_H$ correspondant aux liaisons hydrogène du paramètre de solubilité $\delta$ de la ou des matières de charge sont supérieures à la part $\delta_d$ correspondant aux forces de dispersion du paramètre de solubilité $\delta$ de la ou des matières de charge.

26. Produit moulé formé d'amidon homogène apte à subir une transformation thermoplastique, selon l'une des revendications 22 à 25.

27. Utilisation de l'amidon apte à subir une transformation thermoplastique selon l'une des revendications 22 à 25 comme matière de remplissage pour le remplissage/ou la formulation de polymères thermoplastiques ou thermodurcissables.

28. Utilisation de l'amidon homogène apte à subir une transformation thermoplastique selon l'une des revendications 22 à 25 comme base pour l'absorption d'agents actifs et/ou de réactifs.

29. Utilisation de l'amidon homogène apte à subir une transformation thermoplastique selon l'une des revendications 23 à 25 pour la fixation d'eau dans un environnement pauvre en eau et/ou sur un support perméable à l'eau, l'amidon étant utilisé sous la forme d'une feuille, d'une structure réticulée ou d'un autre produit extrudé.

Tabelle I

| Zuschlagstoff | Thermische Umwandlung (Temp °C) | | |
| --- | --- | --- | --- |
| | Peak | | |
| | von | Peakmitte | bis |
| * Propylenglycol | 78 | 142 | 175 |
| Aethylenglycol | 40 | 80 | 120 |
| Glycerin | 45 | 110 | 140 |
| DMSO | 65 | 80 | 150 |
| * Butylenglycol | 180 | 190 | 200 |

10 Gew.%  Zuschlagstoff

 0 Gew.%  Wasser

* Vergleichsversuch

Tabelle II

| Stärke | Probe | A | $T_3$ (°C) | $T_4$ (°C) | $T_5$ (°C) | $T_6$ (°C) | $T_E$ (°C) | B (U/Min) | C (kW) | D (kg/Std) | E (g/Mol) | F (%) |
|---|---|---|---|---|---|---|---|---|---|---|---|---|
| $P_3$ | 2a | 0,4 | 130 | 120 | 110 | 110 | 105 | 150 | 8 | 81 | 193 | 50 |
| $P_3$ | 2b | 0,4 | 110 | 98 | 86 | 110 | 108 | 150 | 15 | 90 | 165 | – |
| $P_3$ | 3a | 0,35 | 130 | 110 | 105 | 109 | 110 | 150 | 10 | 99 | 173 | 40 |
| $P_3$ | 3b | 0,35 | 130 | 110 | 105 | 105 | 106 | 150 | 8,5 | 90 | 188 | 50 |
| $P_3$ | 3c | 0,35 | 130 | 110 | 95 | 128 | 125 | 150 | 11 | 90 | 145 | 30 |
| $P_3$ | 4a | 0,3 | 130 | 120 | 110 | 138 | 139 | 150 | 15 | 90 | 130 | 0 |
| $P_3$ | 4b | 0,3 | 140 | 140 | 140 | 148 | 146 | 150 | 5 | 90 | 116 | 0 |
| $P_3$ | 5a | 0,25 | 90 | 88 | 85 | 143 | 125 | 150 | 22 | 90 | 66 | 5 |
| $P_3$ | 5b | 0,25 | 140 | 135 | 136 | 155 | 150 | 150 | 18 | 90 | 69 | 0 |
| $P_4$ | 6 | 0,4 | 105 | 95 | 85 | 109 | 108 | 150 | 11,5 | 90 | 239 | 40 |
| $P_4$ | 7 | 0,35 | 105 | 95 | 85 | 119 | 114 | 150 | 14 | 90 | 153 | 15 |
| $P_4$ | 8 | 0,3 | 140 | 140 | 130 | 149 | 145 | 150 | 16,5 | 90 | 126 | 0 |
| $P_4$ | 9 | 0,25 | 140 | 140 | 135 | 157 | 150 | 150 | 20 | 90 | 73 | 25 |
| $P_4$ | 10 | 0,25 | 90 | 85 | 85 | 144 | 125 | 150 | 22,5 | 90 | 68 | 5 |
| $P_4$ | 11a | 0,3 | 90 | 70 | 70 | 118 | 113 | 130 | 16,5 | 75 | 141 | 5 |
| $P_4$ | 12a | 0,25 | 85 | 65 | 65 | 126 | 119 | 130 | 21 | 75 | 92 | – |
| $P_4$ | 12b | 0,25 | 85 | 60 | 60 | 118 | 118 | 130 | 21,5 | 75 | 95 | 5 |
| $P_3$ | 13 | 0,25 | 85 | 63 | 61 | 115 | 112 | 130 | 15 | 55 | 91 | – |
| $P_3$ | 14 | 0,3 | 85 | 65 | 62 | 113 | 112 | 120 | 13 | 55 | 141 | – |

## Tabelle III

| | Modul (GPa) | A (-) | E ($cm^3$/g) | F (%) | G (%) | H ($kJ$/m2) |
|---|---|---|---|---|---|---|
| I | 1,6 - 2,2 | 0,15 | 60 - 150 | 0 - 5 | 40 - 55 | 500 - 650 |
| II | 1,6 - 2,2 | 0,15 | 150 - 200 | 5 - 50 | 2 - 5 | 15 - 50 |

EP 0 397 819 B1

Tabelle IV

| m | T (°K) | A |
|---|---|---|
| 0,68 | 433 | 0,203 |
| 0,74 | 441 | 0,203 |
| 0,78 | 443 | 0,203 |
| | | |
| 0,68 | 455 | 0,181 |
| 0,75 | 463 | 0,181 |
| 0,78 | 466 | 0,181 |